# EUROPÄISCHE PATENTSCHRIFT

(11) **EP 0 392 266 B1**
(45) Veröffentlichungstag und Bekanntmachung des Hinweises auf die Patenterteilung: **22.12.1993**
(21) Anmeldenummer: 90105942.8
(22) Anmeldetag: 28.03.1990
(51) Int. Cl.: F16L 5/02

(54) **Vorrichtung zum Abdichten einer Durchführungsöffnung, beispielsweise bei Kabelrohrzügen**
Device for sealing a sleeve hole, for example for lengths of a pipe and cable assemblies
Dispositif pour l'étanchement d'une ouverture de passage, par exemple pour garnitures de câbles et de tubes

(30) Priorität: 13.04.1989 DE 3912179
(43) Veröffentlichungstag der Anmeldung: 17.10.1990
(73) Patentinhaber: RXS Schrumpftechnik-Garnituren GmbH, D-58093 Hagen (DE)
(72) Erfinder: Meltsch, Hans-Jürgen, D-5840 Schwerte 4 (DE); Hoppe, Günter, D-5800 Hagen 2 (DE)
(74) Vertreter: Fuchs, Franz-Josef, Dr.-Ing.

(56) Entgegenhaltungen:
- EP-A- 0 158 416
- EP-A- 0 242 189
- EP-A- 0 274 933
- DE-C- 3 739 714
- FR-A- 2 307 353
- GB-A- 1 594 937
- US-A- 2 868 230
- US-A- 3 016 562
- US-A- 3 984 623

## Beschreibung

Die Erfindung betrifft eine Vorrichtung zum Abdichten einer Durchführungs- oder Rohröffnung, beispielsweise eines Rohrzuges in einem Kabelschacht, bestehend aus einem Rohrdichtungsring mit einer äußeren Ringdichtung und einem nach außen überstehenden Ende und aus einem Anpassungselement.

Aus der DE-C-37 39 714 ist eine Vorrichtung zum Abschließen und Abdichten eines freien Endes eines Kabelführungsrohres bekannt, die aus einem im wesentlichen zylindrischen, Bereiche des freien Endes des Kabelführungsrohres außen umgreifenden, geteilten Gehäuse gebildet ist. Eine stirnseitige Abschlußwand kann dabei wenigstens bereichsweise entfernt werden. Außerdem ist im Inneren der Vorrichtung eine Dichtmasse eingebettet. Hier ist jedoch nur eine sehr grobe Anpassung an die jeweiligen Verhältnisse möglich, da mit dieser Vorrichtung das jeweils abzuschließende Kabelführungsrohr von außen umfaßt wird, so daß die Vorrichtung jeweils genau dem Durchmesser des abzuschließenden Rohres angepaßt sein muß. Das Gehäuse ist außerdem längsgeteilt und wird nach der Montage mit einer Klemmschiene verschlossen. Dies bedeutet, daß alle Montage- und Dichtungsarbeiten in einem Arbeitsgang durchgeführt werden müssen, was bei der Verschiedenheit der Abdichtungsstellen zu gewissen Schwierigkeiten führen kann. Außerdem ist die teilweise Herausnahme der Abschlußwand an der Stirnseite der Vorrichtung ebenfalls nur eine recht grobe Anpassung, wobei die Abdichtung sehr viel Geschick erfordert. Außerdem ist der Innenraum mit einer Dichtmasse ausgefüllt, die offenbar auch je nach Durchmesser des durchgezogenen Kabels entfernt werden muß. So ist insgesamt der Einsatz einer solchen Vorrichtung relativ umfangreich und sehr vom Geschick des Monteurs abhängig.

Aus der europäischen Anmeldung EP-A-0 242 189 ist nun ebenfalls eine Vorrichtung zum Abdichten von Durchführungsöffnungen bekannt. Hier wird ein mittels einer Feder aufspreizbarer Einsatz für Duchführungsöffnungen verwendet, der nach Auslösung einer Arretiervorrichtung aufgespreizt und gegen die zylindrische Wandung der Durchführungsöffnung gepreßt wird. Eine ringförmige Abdichtung erfolgt durch Erwärmung eines durch Wärmezufuhr aktivierbaren Dichtungsmittels. Innerhalb dieses aufspreizbaren Einsatzes ist ein Ring mit einem nach außen überstehenden Ring angeordnet. In diesem Ring wird dann ein Anpassungselement eingesetzt, das wärmeschrumpfbar ist und auf den jeweils eingeführten Gegenstand durch Wärmezufuhr aufgeschrumpft wird. Bei einer derartigen Anordnung sind viele Einzelelemente und der Einsatz von Wärme nötig, wobei bei Mehrfacheinführungen noch zusätzliche Bauteile und Maßnahmen nötig sind.

Es besteht für vorliegende Erfindung die Aufgabe, eine Vorrichtung zu schaffen, mit der eine unproblematische Abdichtung sowohl an der Dichtungsstelle der eigentlich abzudichtenden Durchführungsöffnung als auch an der Dichtungsstelle zwischen der Vorrichtung und dem durchgeführten Gegenstand erfolgen kann, wobei bei der ersten wie auch bei der zweiten Abdichtstelle ein möglichst großer Anpassungsbereich mit einfachen Mitteln erreichbar sein soll. Die gestellte Aufgabe wird nun gemäß der Erfindung mit einer Vorrichtung der eingangs erläuterten Art dadurch gelöst, daß der Rohrdichtungsring zumindest einfach längsgeschlitzt ist, daß das Anpassungselement zumindest einfach längsgeteilt ist und einen Einführungsbereich für bei Bedarf einbringbare Gegenstände sowie auf die einzuführenden Gegenstände angepaßte Einführungsöffnungen aufweist und daß das Anpassungselement an dem überstehenden Ende des Rohrdichtungsringes ansetzbar ist.

Die Vorrichtung gemäß der Erfindung ist im großen und ganzen sehr universell für Abschlußprobleme an zylindrischen wie auch ovalen Öffnungen jeglicher Art einzusetzen und ist besonders dann zweckmäßig, wenn die Wahrscheinlichkeit gegeben ist, daß zu irgend einem Zeitpunkt ein langgestreckter Gegenstand dichtend nachträglich eingeführt werden soll. Da die Montagearbeiten unabhängig vom Verwendungszweck sind, genügt es, die Erfindung an einem speziellen Ausführungsbeispiel, das sich mit Problemen des Abschlusses von Durchführungsrohren in Kabelschächten befaßt, zu erläutern.

Kabelschächte werden durch Rohrzüge, in die je nach Ausbaustufe Kabel eingezogen werden, verbunden. Eine Abdichtung der Kabel zum Rohrzug existiert im allgemeinen bisher nicht. Durch die Rohrzüge kann jedoch in ungünstigen Fällen Wasser einlaufen und sich fast ungehindert über das gesamte Netz hinweg ausbreiten, so daß es zu Störungen und Gefährdungen führen kann. Um dies zu unterbinden, kann man solche Rohrzüge, ob sie belegt oder unbelegt sind, an den Durchführungsöffnungen in den Kabelschächten abdichten. Für unbelegte Rohrzüge gibt es im allgemeinen keine Probleme, da der Verschluß in einfacher Weise mit einem Stopfen hergestellt werden kann. Anders sieht es aus, wenn belegte Rohrzüge mit bereits eingezogenen Kabeln abgedichtet werden sollen. Hier müssen dann längsgeteilte Dichtungssysteme eingesetzt werden. Außerdem ist es zweckmäßig, wenn man bei zunächst unbelegten Durchführungsöffnungen Dichtungssysteme einsetzt, bei denen nachträglich Kabel eingezogen werden können, ohne daß bereits bestehende Dichtungssysteme zur umgebenden Wand herausgenommen werden müssen.

Diese aufgezeigten Probleme lassen sich nun mit einer Vorrichtung gemäß der Erfindung lösen. Ein Hauptmerkmal ist dabei, daß die Funktionen der Rohrdichtung und der Kabeldichtung getrennt voneinander behandelt werden. So wird die Dichtung der Rohrdurchführungsöffnung mit einem zunächst separaten Rohrdichtungsring aus Kunststoff, zum Beispiel Polyolefin, Polyethylen (MDPE) oder Polypropylen vorgenommen, wobei dieser Rohrdichtungsring innerhalb der Durchführungsöffnung eingesetzt und durch Aufspreizung gegen die Rohrwand gepreßt wird. Dazwischen wird zuvor eine plastische oder elastische Dichtung eingefügt. Auf diese Weise ist in einfacher Art eine Durchmesseranpassung in großen Bereichen möglich. Ein aus der Durchführungsöffnung herausragendes Ende des Rohrdichtungsringes dient zur Ankopplung eines längsgeteilten Anschlußelementes, das entweder als dichter Abschluß oder als Einführungskörper mit entsprechend angepaßten Einführungsöffnungen ausgebildet ist.

Die Dichtung gegenüber den eingeführten Gegenständen, zum Beispiel einem Kabel, erfolgt nach dem an sich bekannten Lamellenprinzip, das heißt mehrere, im Inneren des Anschlußelementes hintereinander liegende Lamellen werden mit angepaßten Einführungsöffnungen versehen und auf den eingeführten Gegenstand aufgepreßt. Je nach Erfordernis der Dichtigkeit werden entsprechende Dichtungsmittel zusätzlich eingeführt.

So ergeben sich nun folgende Vorteile. Infolge der relativ geringen Abmessungen sind sehr geringe Abstandsverhältnisse zwischen dem eingeführten Gegenstand und der Durchführungsöffnung möglich. Die Montage mit wenigen Einzelteilen und die mechanische Fixierung der Vorrichtung in der Durchführungsöffnung wird dabei sehr einfach durch Spreizung des Rohrdichtungsringes vorgenommen. Durch Zusatzteile bzw. spezielle Ausformungen, die bei der Herstellung des Durchlasses entstehen, ist auch eine weitere Abstützung des eingeführten Gegenstandes, zum Beispiel eines Kabels, möglich, und damit ergibt sich eine mechanische Entlastung des Dichtungssystems. Die Kabelanpassung kann stufenlos erfolgen. Außerdem sind mehrere Kabel in eine Durchführungsöffnung einführbar, da in der Abschlußwandung des Anpassungselementes mehrere angepaßte Einführungsöffnungen je nach Bedarf eingebracht werden können. Zusätzlich können Ausschäumräume vorgesehen werden. Die Platzbeanspruchung ist gering, da die Abdichtung zur Durchführungsöffnung bereits innerhalb derselben erfolgt. Fertigungstoleranzen der Durchführungsöffnungen in vorgegebenen Einheiten, wie zum Beispiel bei Rohrzügen von Kabelanlagen, werden problemlos aufgefangen. Außerdem ist die Biegebeanspruchung auf das System infolge der sehr kurzen Baulänge sehr gering.

Diese genannten Vorteile werden nun im folgenden anhand einer Vorrichtung gemäß der Erfindung in sechsundzwanzig Figuren näher erläutert.
- Figur 1: zeigt ein Schnittbild durch die Vorrichtung, bestehend aus einem Rohrdichtungsring und einem Anpassungselement.
- Figur 2: zeigt die Ansicht auf die Abschlußwandung des Anpassungselementes.
- Figur 3: zeigt eine Ausführung nach Figur 1 mit einem zusätzlichen Freiraum für besondere Einbaumaßnahmen.
- Figur 4: zeigt den Einführungsbereich einer Durchführungsöffnung.
- Figur 5: zeigt Einführhilfen am Rohrdichtungsring.
- Figur 6: zeigt den Querschnitt einer Einführhilfe.
- Figur 7: zeigt Stützlippen als Einführhilfe für die Ringdichtung.
- Figur 8: zeigt eine Variante von Figur 7.
- Figur 9: zeigt eine Anordnungsweise der Einführhilfen.
- Figur 10: zeigt die Frontansicht des Rohrdichtungsringes.
- Figur 11: zeigt den Spreizbereich des Rohrdichtungsringes in Frontansicht.
- Figur 12: zeigt die Anordnung nach Figur 11 in Draufsicht.
- Figur 13: zeigt einen Rohrdichtungsring mit einer eingesetzten Stützscheibe im Querschnitt.
- Figur 14: zeigt eine Stützscheibe in Frontansicht.
- Figur 15: zeigt eine Stützscheibe mit Hilfsstützelementen in Frontansicht.
- Figur 16: zeigt die Anordnung nach Figur 15 in Seitenansicht.
- Figur 17: zeigt den Bereich der Längstrennung des Rohrdichtungsringes in der Außenansicht.
- Figur 18: zeigt den in Figur 17 angedeuteten Schnitt.
- Figur 19: zeigt einen Spreizkeil mit einem Schraubelement.
- Figur 20: zeigt einen Rohrdichtungsring aus Halbschalen.
- Figur 21: zeigt den Bereich der Längstrennung bei Halbschalen im gekippten Zustand der Halbschalen.
- Figur 22: zeigt den Bereich nach Figur 21 im geschlossenen Zustand.
- Figur 23: zeigt den Bereich der Längstrennung mit wellenförmigen Profilierungen an den Längsrändern in der Einführungsphase.
- Figur 24: zeigt den Bereich nach Figur 23 im gespreizten Zustand des Rohrdichtungsringes.
- Figur 25: zeigt einen Spreizmechanismus mit keilförmigen Wülsten.
- Figur 26: zeigt den Spreizmechanismus im geschlossenen Zustand.

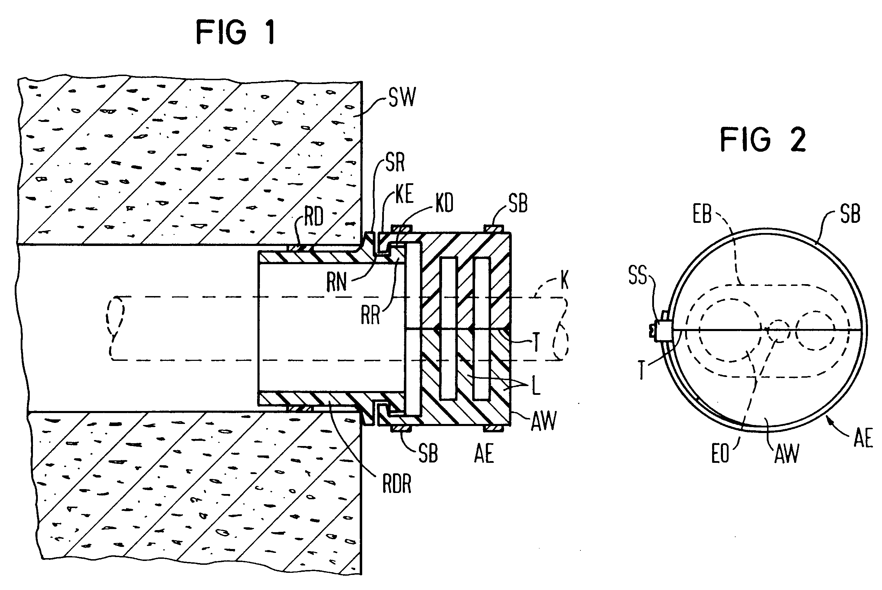

In Figur 1 ist die Schachtwand SW eines Kabelschachtes angedeutet, in der eine Durchführungsöffnung in Form eines sogenannten Rohrzuges RZ eingebracht ist. Diese Durchführungsöffnung RZ soll nun mit Hilfe einer Vorrichtung gemäß der Erfindung abgeschlossen werden, wobei zunächst nicht von Bedeutung ist, ob dieser Rohrzug RZ frei oder - wie angedeutet - mit einem Kabel K belegt ist. In der Durchführungsöffnung RZ ist ein Rohrdichtungsring RDR eingesetzt, mit dem eine Abdichtung zur Wandung des Rohrzuges RZ hergestellt wird. Der Rohrdichtungsring RDR ist, was hier nicht sichtbar ist, längsgeteilt und wird nach dem Einführen aufgespreizt. Über eine zwischen der Wandung SW und dem Rohrdichtungsring RDR eingelegte Ringdichtung RD wird der Ringspalt abgedichtet, wobei der Rohrdichtungsring RDR bis zu seinem als Stützring SR ausgebildeten Anschlag eingeschoben und fixiert ist. Der Rohrdichtungsring RDR hat ein nach außen überstehendes Ende, in dem auf der Außenseite eine umlaufende Ringnut RN angeordnet ist, die am äußersten Ende von einem Rastelement, vorzugsweise einem Rastring RR abgeschlossen ist. In dieser Ringnut RN wird dann das eigentliche Abschlußteil in Form eines Anpassungselementes AE, das in seiner Abschlußwandung AW mit Einführungsöffnungen versehen werden kann, mit einem Koppelelement KE eingerastet und schließlich mit Hilfe von Spannbändern SB festgeklemmt. Eine auf dem Rastring RR eingelegte umlaufende Kopplungsdichtung KD sorgt für die erforderliche Dichtung zwischen dem Rohrdichtungsring RDR und dem Anschlußelement AE. Das Anschlußelement AE selbst ist ebenfalls zumindest einfach, zweckmäßigerweise jedoch zweifach längsgeteilt und besitzt entlang der Trennungslinien die an sich bekannten Dichtungsnuten mit eingelegter Dichtung aus elastischem oder plastischem Material. Der nötige Dichtungsdruck wird ebenfalls durch die umgelegten Spannbänder SB erzeugt. Das Anpassungselement ist in diesem speziellen Fall, was jedoch nicht zwingend ist, mit mehreren hintereinander liegenden Lamellen L und dazwischen liegenden Hohlräumen versehen, so daß sich mehrere Abdichtungsbereiche hintereinander ergeben. Auch hier wird jeweils in der Trennungsebene T eine Dichtungsmasse plastischer oder elastischer Art eingelegt. Soll nun eine Durchführungsöffnung RZ lediglich abgeschlossen werden, so wird das Anschlußelement in unbearbeiteter Form wie bisher erläutert an den Rohrdichtungsring RDR mit Hilfe der Spannbänder SB angesetzt. Damit ist die Durchführungsöffnung mit der erforderlichen Dichtigkeit abgeschlossen. Ist jedoch bereits im Rohrzug RZ ein Kabel K angeordnet oder soll dort nachträglich ein solches eingeführt werden, so sind die Abschlußwandung AW und die hintereinander liegenden Lamellen L mit Einführungsöffnungen EO zu versehen, die im Durchmesser mit einer Schneidevorrichtung gerade so ausgeschnitten werden, daß sich die erforderliche Abdichtung erreichen läßt. Je nach Erfodernis der Dichtungsansprüche kann in den Ringspalten auch Dichtungsmasse plastischer oder elastischer Art eingefügt werden. Je nach Durchmesser der einzuführenden Kabel können auch mehrere Kabel K in der Trennebene nebeneinander liegend eingeführt bzw. abgedichtet werden.

Die Figur 2 zeigt die Frontansicht des Anpassungselementes AE mit seiner Abschlußwandung AW. Daraus ist ersichtlich, daß das Anpassungselement AE in der Trennebene T geteilt ist, so daß das Anpassungselement AE auch über bereits eingeführte Kabel K aufgesetzt werden kann. Die dafür erforderlichen Einführungsöffnungen EO werden innerhalb des angedeuteten Kabeleinführungsbereiches EB eingeschnitten. Nach Durchführung der Montagearbei ten in den Abdichtungsbereichen werden die beiden Hälften des Anpassungselementes AE mit Hilfe der Spannbänder SB zusammengepreßt und fixiert. Ein Spannschloß SS dient zum Spannen und Fixieren der Spannbänder SB.

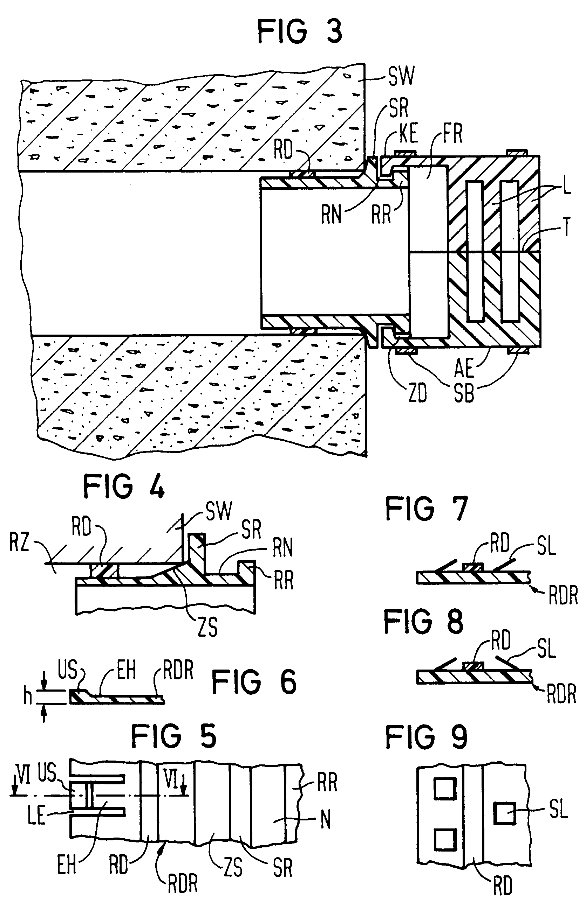

Das Ausführungsbeispiel nach Figur 3 unterscheidet sich von dem in Figur 1 gezeigten lediglich dadurch, daß zwischen dem Ende des Rohrdichtungsringes RDR und der ersten Lamelle L des Anpassungselementes AE ein Freiraum FR ausgebildet ist, in dem Platz für Besonderheiten, wie zum Beispiel zum Anordnen einer Kabelabfangvorrichtung, geschaffen ist. Die anderen Einzelheiten sind bereits beschrieben.

In Figur 4 wird verdeutlicht, daß am Stützring SR des Rohrdichtungsringes RDR auf der zur Schachtwand SW weisenden Seite eine Zentrierschräge ZS ausgebildet ist, die dazu dient, daß der Rohrdichtungsring RDR beim Einführen in die Durchführungsöffnung RZ bis zur sicheren Abstützung zentriert eingesetzt werden kann. Auf dem äußeren Umfang des Rohrdichtungsringes RDR ist die Ringdichtung RD erkennbar. Die übrigen Einzelheiten sind ebenfalls bereits beschrieben.

Figur 5 zeigt, daß am inneren Ende des Rohrdichtungsringes RDR Einführhilfen EH eingearbeitet sind, die als federnde Elemente mit nach auswärts weisenden Überständen US durch Längseinschlitzungen LE gebildet sind. Dadurch wird gewährleistet, daß der längsgeschlitzte Rohrdichtungsring RDR auch beim Einführen in die Durchführungsöffnung RZ nicht selbst festklemmt und dadurch das Einschieben behindert. Außerdem wird während des Einschiebens auch die umlaufende Ringdichtung RD gegen Abstreifen, Ankleben bzw. Verschieben geschützt. Die Markierungen VI-VI deuten den folgenden Schnitt an.

In Figur 6 wird nun dieser genannte Schnitt dargestellt und zwar läßt sich daraus erkennen, daß die federnde Einführhilfe EH am Ende nach auswärts durch den Überstand US verstärkt ist, so daß der längsgeschlitzte Rohrdichtungsring RDR ohne Selbstklemmung in die Duchführungsöffnung RZ eingeführt werden kann. Die Höhe h des Überstandes US ist dabei so gewählt, daß die nachfolgende Ringdichtung RD in der Höhe nicht darüber hinausragt.

In Figur 7 werden federnde Stützlippen SL dargestellt, die nahe der Ringdichtung RD so angewinkelt angeordnet sind, daß der Rohrdichtungsring RDR wiederum ohne Behinderung eingeschoben werden kann, wobei die umlaufende Ringdichtung RDR geschützt ist. Bei der nachfolgenden Spreizung des Rohrdichtungsringes RDR sind sie jedoch niederdrückbar, so daß auf die Ringdichtung RD Dichtungsdruck infolge der Spreizung ausgeübt wird. Hier sind die Stützlippen SL vor und hinter der Ringdichtung RD in gleicher Richtung geneigt.

Figur 8 zeigt eine gegenseitig geneigte Anordnung von Stützlippen SL vor und hinter der Ringdichtung RD.

Die Figur 9 zeigt an, daß die Stützlippen SL zweckmäßigerweise nicht als federnde Ringlippen ausgebildet sind, sondern daß partielle Dichtungslippen SL in wechselseitiger Stellung angeordnet sind. Dadurch ist eine bessere Flexibilität gegeben.

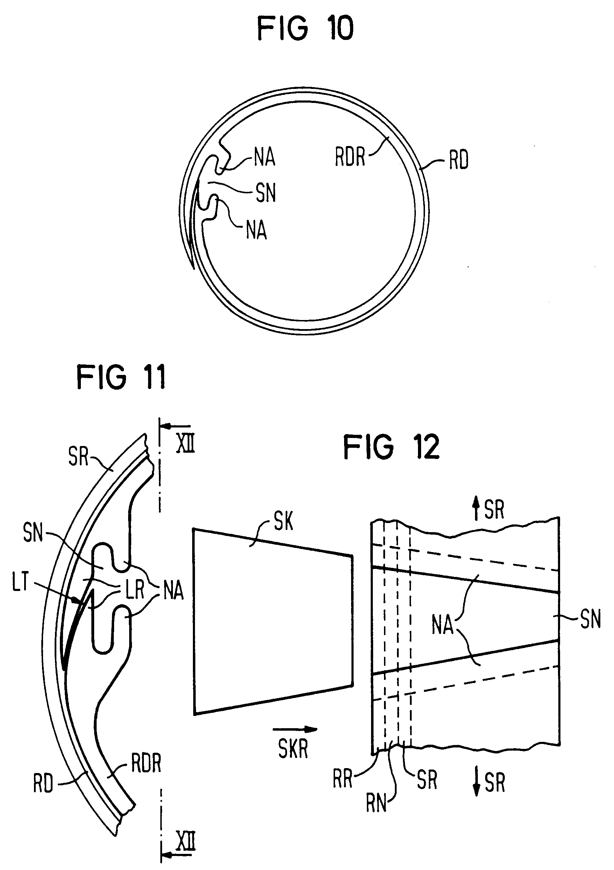

In Figur 10 wird nun die Ausbildung des Rohrdichtungsringes RDR in einer Frontansicht erläutert. Daraus ist ersichtlich, daß der Rohrdichtungsring RDR im Prinzip als zylindrischer Formkörper ausgebildet ist, der in Längsrichtung einmal geschlitzt ist. Die beiden Ränder entlang dieses Schlitzes überdecken sich gegenseitig so weit, daß auch beim Aufspreizen zum größten Durchmesser noch eine zur Abdichtung ausreichende Überdeckung vorhanden ist. Die Ringdichtung RD auf der Außenseite des Rohrdichtungsringes RDR ergibt dabei die Abdichtung zur umgebenden Wandung der Durchführungsöffnung RZ. Zur Aufspreizung des Ringdichtungsringes RDR sind nun entlang der beiden Längsränder Nutansätze NA so angeordnet, daß sich zwei Nuten bilden, deren Öffnungen sich gegenüberstehen. Auf diese Weise entsteht zwischen ihnen eine doppelte Spreiznut SN, in welche ein entsprechendes langgestrecktes Spreizelement eingetrieben werden kann. Bei dieser Eintreibung wird der Rohrdichtungsring RDR im Durchmesser vergrößert und nach auswärts mit seiner Ringdichtung RD gegen die Wandung der Durchführungsöffnung RZ gepreßt. Die Durchmesseranpassung des Rohrdichtungsringes RDR an den Durchmesser der Durchführungsöffnung RZ erfolgt durch entsprechende Wahl der Spreizelemente, die je nach Erfordernis entsprechend breit oder schmal sind.

In Figur 11 wird die Ausführung der Einzelheiten für die Spreiznut SN näher erläutert, wobei auch zu sehen ist, daß die Längsränder LR spitz zulaufend ausgebildet sind, so daß sie beim Aufspreizen in der Längsteilung LT ohne Stufenbildung aufeinander abgleiten können. Die Abdichtung erfolgt durch die dazwischenliegende Ringdichtung RD. Außerdem sind die Nutansätze NA mit der dazwischen gebildeten doppelten Spreiznut SN deutlich zu erkennen. Weiterhin ist die Ansichtsseite XII-XII für die folgende Figur 12 angedeutet.

In dieser Figur 12 wird nun der Spreizvorgang durch die entsprechenden Pfeile verdeutlicht. So wird durch den Pfeil SKR angedeutet, daß ein vorzugsweise konischer Spreizkeil SK in die ebenfalls vorzugsweise konisch angepaßte Spreiznut SN des Rohrdichtungsringes RDR eingeführt bzw. eingetrieben wird. Bei diesem Vorgang wird der Rohrdichtungsring RDR in Richtung der beiden Pfeile SR auseinander getrieben und gegen die Außenumfassung der Durchführungsöffnung RZ gepreßt. Im übrigen sind zur Orientierung die weiteren, jedoch bereits beschriebenen Einzelheiten dargestellt.

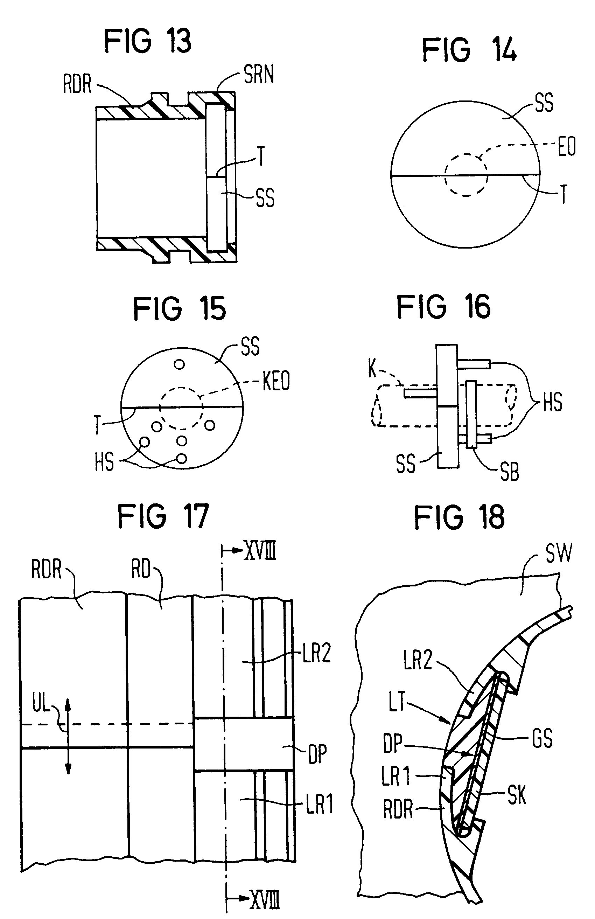

Die Figur 13 zeigt eine zusätzliche Verbesserung des Rohrdichtungsringes RDR für eingeführte Einheiten, die besonders Biegebeanspruchungen ausgesetzt sind. Dadurch würden in der normalen Ausführung die Dichtungssysteme einer ständigen Zusatzbelastung ausgesetzt und schließlich defekt werden. Hier werden nun diese zusätzlichen Belastungen dadurch verhindert, daß am überstehenden Ende des Rohrdichtungsringes RDR zusätzlich eine Stützscheibe SS vorzugsweise in einer Stützringnut SRN eingesetzt wird, die ebenfalls wie die Abschlußwandung AW des Anpassunselementes AE mit fluchtenden Einführungsöffnungen EO versehen wird. Dadurch wird das auf die Dichtungsebene wirkende Biegemoment herabgesetzt und die Wechselbelastung wird gemindert.

Die Figur 14 zeigt eine Stützscheibe SS, die ebenfalls in der Einführungsebene geteilt ist, so daß sie nachträglich auf bereits eingeführte Kabel aufgebracht werden kann. Eine Einführungsöffnung EO ist angedeutet.

Die Figur 15 zeigt eine Stützscheibe SS mit weiteren Verbesserungen. Hier sind in Richtung der Stützscheibenachse parallel abstehende Hilfsstützelemente HS angeordnet, an denen mit Hilfe von Klemmbändern oder ähnlichen Mitteln die durchgeführten Kabel K zusätzlich fixiert werden können, so daß sie noch starrer wie vorher fixiert werden können.

Die Figur 16 zeigt zum besseren Verständnis der Figur 15 eine Seitenansicht, woraus besser hervorgeht, wie ein Kabel K mit Hilfe eines Spannbandes SB an einem solchen Hilfsstützelement HS fixiert werden kann.

Die Figur 17 zeigt einen Rohrdichtungsring RDR im Bereich der Längstrennung, wobei sich auch bei größter Aufspreizung noch ein Überlappungsbereich UL der beiden Längsränder ergeben muß. Bei diesem Ausführungsbeispiel ist nun am zum Teil aus der Rohröffnung überstehenden Ende des Rohrdichtungsringes RDR im Trennbereich eine Aussparung vorgesehen, durch die von innen heraus eine Dichtplatte DP aus Dichtungsmaterial gegen die Wandung der Durchführungs- oder Rohrzugöffnung gepreßt wird. Die Pressung erfolgt durch den in die Spreiznut einzutreibenden Spreizkeil SK.

Die Dichtungsverhältnisse in der Spreiznut nach Figur 17 werden in der Figur 18 im Schnittbild näher erläutert. Hier ist erkennbar, daß zwischen dem in der Spreiznut geführten Spreizkeil SK und den Längsrändern LR1 und LR2 die Dichtplatte DP eingefügt ist, die im Bereich der Längstrennung LT durch die erwähnte Aussparung hindurch gegen die Wandung SW gedrückt wird, so daß hiermit die Abdichtung erfolgt. Ferner kann zwischen dem Spreizkeil SK und der Dichtplatte DP eine Gleitschicht GS eingebracht werden, damit die Dichtplatte DP das Eintreiben des Spreizkeils SK nicht behindert. Die bisher beschriebenen Einzelheiten können selbstverständlich auch hier zusätzlich eingesetzt werden.

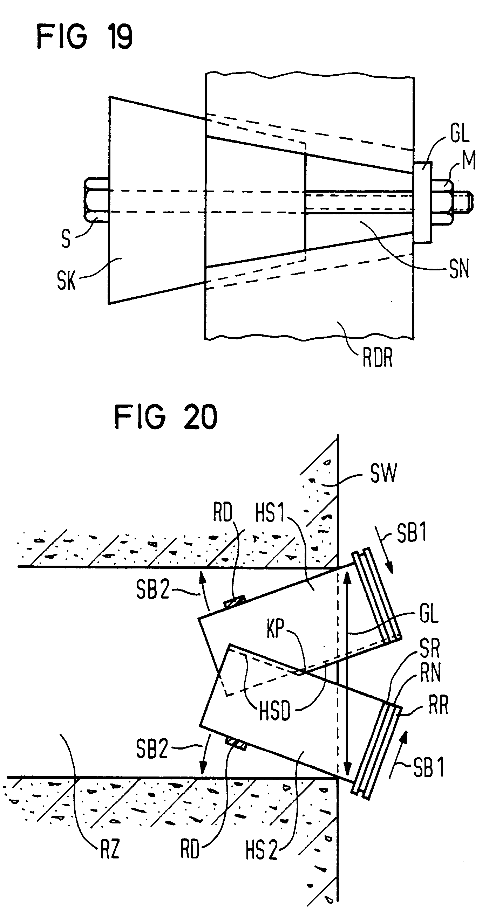

Die Figur 19 verdeutlicht den Eintreibvorgang des Spreizkeils SK mit Hilfe eines Schraubmittels S, das zum Beispiel durch den Spreizkeil SK hindurchgeführt ist und am zweiten Ende des Rohrdichtungsringes RDR in ein Gegenlager GL eingreift, wenn dieses zum Beispiel ein Gewinde aufweist. Hier ist eine Mutter M eingesetzt. Durch das Eindrehen des Schraubmittels S wird der konische Spreizkeil SK in die angepaßte Spreiznut Sn eingezogen, wobei der Rohrdichtungsring RDR aufgespreizt wird. Selbstverständlich läßt sich auch dieses System so umdrehen, daß das Schraubmittel direkt in den Spreizkeil SK eingedreht wird. Das Eintreiben kann jedoch auch durch Einschlagen vorgenommen werden, doch besteht hier Verletzungsgefahr bei unsachgemäßer Behandlung.

In Figur 20 wird nun ein Rohrdichtungsring ebenfalls gemäß der Erfindung gezeigt, der jedoch aus zwei Halbschalen HS1 und HS2 gebildet wird, so daß zwei Längstrennbereiche gegeben sind. Die beiden Halbschalen HS1 und HS2 sind nun über zwei Kippunkte KP in der Mitte der Längsbereiche gegeneinander kippbar miteinander über ein Gelenk, über Teilachsen, Stifte oder über gegenseitige Führungen verbunden, und zwar so, daß beim Auseinanderklappen der Halbschalen HS1 und HS2 an ihren äußeren mit Ringnut RN versehenen Enden eine Durchmesserverkleinerung des Rohrdichtungsringes am entgegengesetzten, in die Durchführungsöffnung einzuführenden Ende ergibt. In der Figur 20 ist dieser Einführungsvorgang dargestellt, wobei das äußere Ende noch aufgeklappt ist. Die Pfeile SB1 deuten die Schließbewegung an, die nun durchgeführt werden muß. Auf diese Weise werden zwangsläufig die eingeführten Enden entsprechend der Bewegungspfeile SB2 infolge des dazwischen liegenden Kippunktes KP nach auswärts bewegt und über die Ringdichtung RN an die Wandung SW des Durchführungs- oder Rohrzuges RZ gepreßt. Dabei ist zweckmäßig, daß im Bereich des Ankopplungsendes mit der Ringnut RN im Inneren der geschlossenen Halbschalen HS1 und HS2 ein Gegenlager GL zum Beispiel in Form einer Stützscheibe oder ähnlichen Elementen eingeführt wird. Nach dem bereits im ersten Ausführungsbeispiel beschriebenen Auf- bzw. Ansetzen des Anpassungselementes AE ist das gesamte System mittels der aufgesetzten Spannbänder fixiert. Entlang der Längsränder LR der Halbschalen HS1 und HS2 sind Halbschalendichtungen HSD angebracht, durch die die Abdichtung in den Längstrennungen erfolgt. Die Halbschalendichtung kann zum Beispiel geteilt sein, wie es hier angedeutet ist, so daß in jeder Halbschale eine Teildichtung eingelegt ist, die beim Schließvorgang jeweils gegen einen korrespondierend angeordneten Anschlag der gegenüberliegenden Halbschale gedrückt wird.

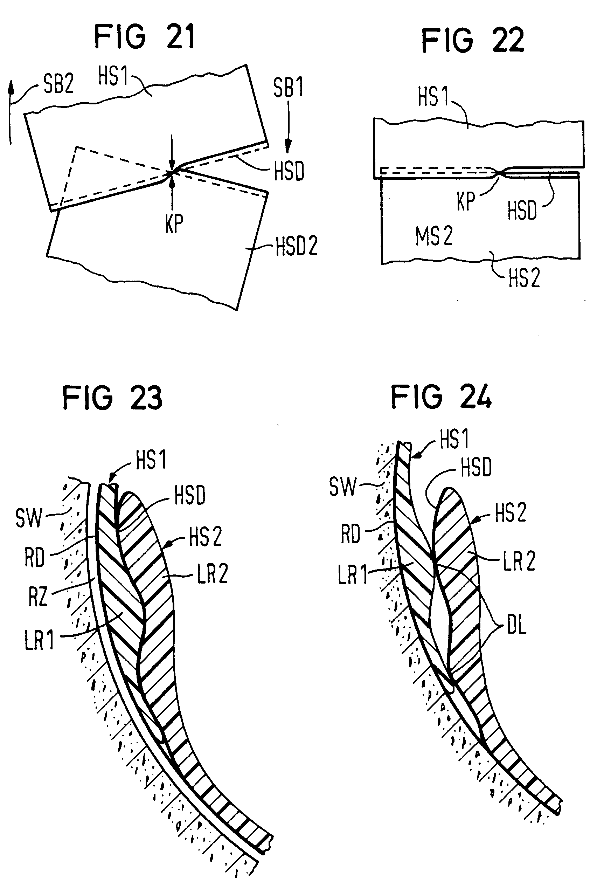

Die Figur 21 verdeutlicht eine Halbschalendichtung HSD, die am Längsrand einer Halbschale HS1 angeordnet ist, wie aus der gekippten Darstellung der Halbschalen hervorgeht. In dieser Stellung erfolgt der Einführungsvorgang.

Die Figur 22 zeigt den Verlauf der Längsdichtung im endgültig montierten Zustand. Die übrigen Details bezüglich Ringabdichtung und Ankopplung sind hier der Übersicht wegen nicht dargestellt.

In Figur 23 wird ein längsverlaufender Überlappungsbereich der Halbschalen HS1 und HS2 dargestellt, wobei hier die Einführungsphase erläutert wird. Die beiden Längsränder LR1 und LR2 sind mit wellenförmigen Profilierungen versehen, wobei sich diese Profilierungen im gekippten Einführungszustand der Halbschalen zumindest annähernd ineinanderfügen. Dazwischen liegt die Halbschalendichtung HSD. Wie man erkennt, kann der aus den Halbschalen HS1 und HS2 bestehende Rohrdichtungsring bei genügend Freiraum in die Durchführungs- oder Rohrzugöffnung RZ eingeführt werden. Auf der Außenseite des Rohrdichtungsringes wird die Abdichtung gegen die Wandung SW mit Hilfe der umlaufenden Runddichtung RD erreicht, wenn diese durch Aufkippen der Halbschalen HS1 und HS2 nach auswärts gedrückt wird.

Die Figur 24 erläutert nun die Ausführungsform nach Figur 23 im endgültig montierten Zustand. Durch Auseinanderkippen der Halbschalen HS1 und HS2 werden diese, wie in Figur 20 bereits erläutert, gegen die Wandung SW gepreßt. Dabei, das heißt durch den Kippvorgang, werden die wellenförmigen Profilierungen entlang der Längsränder LR1 und LR2 gegeneinander verschoben und durch Aufeinandertreffen von gegenüberliegenden Wellenbergen wird der Rohrdichtungsring nach auswärts gegen die Wandung SW gepreßt, wodurch der erforderliche Dichtdruck erreicht wird. Auf diese Weise, das heißt durch das Aufeinanderabgleiten der wellenförmigen Profilierungen ist mindestens eine Dichtlinie DL mit ausreichender Dichtwirkung beibehalten.

Ähnliche Abdichtungen können jedoch auch mit Anschlägen, Hinterschneidungen oder Verhakungen vorgenommen werden. Dabei sind diese Profilierungen so aufeinander abgestimmt, daß die Dichtwirkung im gekippten Endzustand der Halbschalen erreicht wird.

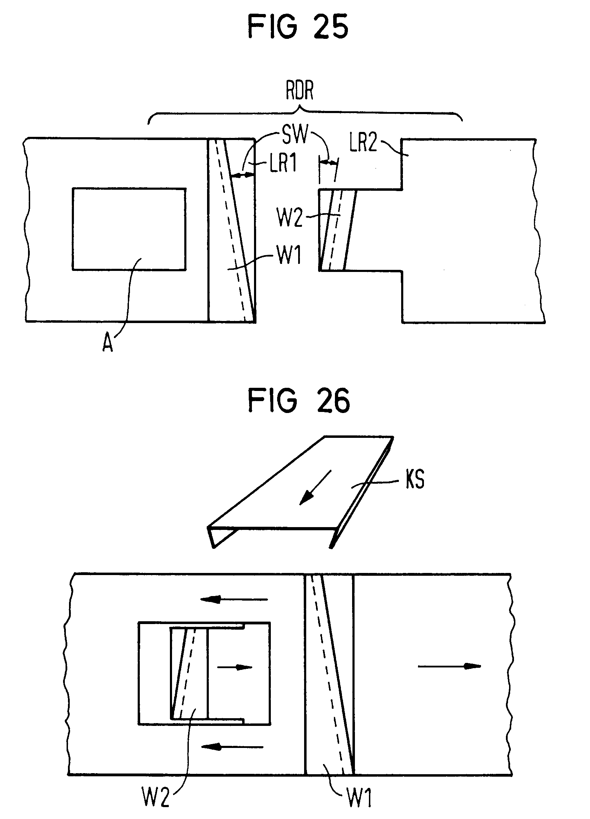

Die Figuren 25 und 26 erläutern ein weiteres Ausführungsbeispiel für die Aufspreizung des Rohrdichtungsringes RDR, die hier mit keilförmig angeordneten Wülsten W1 und W2 und mit einer entsprechend angepaßten Klemmschiene KS erfolgt.

Figur 25 zeigt den Bereich der Längsränder LR1 und LR2 im noch geöffneten Zustand des Rohrdichtungsringes RDR. So ist erkennbar, daß der eine Längsrand LR1 mit einem längsverlaufenden Wulst W1 versehen ist, der im spitzen Winkel SW zur Längskante verläuft. Außerdem ist dieser Längsrand LR1 mit mindestens einem Ausschnitt A hinter dem Wulst W1 liegend versehen, in welchen ein Wulst W2 auf einem Fortsatz F des zweiten Längsrandes LR2 eintaucht, wenn der Rohrdichtungsring RDR geschlossen wird, das heißt dessen Längsränder LR1 und LR2 überlappt werden. Dieser Fortsatz F trägt nun ebenfalls einen Wulst W2, der ebenfalls unter dem spitzen Winkel SW zur Längskante angeordnet ist, jedoch so, daß sie zunächst V-förmig auseinanderlaufen. Die Wülste W1 und W2 sind jeweils an der zur Längskante weisenden Seite hinterschnitten.

Die Figur 26 zeigt nun den zusammengeschobenen Zustand, in dem der Rohrdichtungsring RDR in die Rohröffnung eingeschoben werden kann, das heißt die Längsränder LR1 und LR2 sind überlappt, so daß der Fortsatz F mit dem Wulst W2 im Ausschnitt A erscheint. Durch Aufziehen der Klemmschiene KS auf die nun keilförmig angeordneten Wülste W1 und W2 werden die Längsränder LR1 und LR2 entsprechend der Pfeile auseinandergetrieben und es erfolgt dadurch die Aufspreizung des Rohrdichtungsringes in der Rohröffnung. Der Übersichtlichkeit wegen ist hier nur das Spreizsystem gezeichnet und beschrieben. Doch können auch hier all die vorher beschriebenen Einzelheiten bezüglich Abdichtung und Anpassungselement AE verwirklicht werden. Die Klemmschiene KS wird vorzugsweise im Inneren des Rohrdichtungsringes RDR eingeführt.

## Patentansprüche

1. Vorrichtung zum Abdichten einer Durchführungs- oder Rohröffnung, beispielsweise eines Rohrzuges in einem Kabelschacht, bestehend aus einem Rohrdichtungsring (RDR) mit einer äußeren Ringdichtung (RD) und einem nach außen überstehenden Ende und aus einem Anpassungselement (AE),
**dadurch gekennzeichnet,**
daß der Rohrdichtungsring (RDR) zumindest einfach längsgeschlitzt ist, daß das Anpassungselement (AE) zumindest einfach längsgeteilt ist und einen Einführungsbereich (EB) für bei Bedarf einbringbare Gegenstände sowie auf die einzuführenden Gegenstände (K) angepaßte Einführungsöffnungen (EO) aufweist und daß das Anpassungselement (AE) an dem überstehenden Ende des Rohrdichtungsringes (RDR) ansetzbar ist.

2. Vorrichtung nach Anspruch 1,
**dadurch gekennzeichnet,**
daß der Rohrdichtungsring (RDR) und das Anpassungselement (AE) aus thermoplastischem Kunststoff, vorzugsweise Polypropylen bestehen.

3. Vorrichtung nach einem der vorhergehenden Ansprüche,
**dadurch gekennzeichnet,**
daß der Rohrdichtungsring (RDR) einfach längsgeteilt ist und entlang seiner Längsteilung (LT) spitz auslaufende und sich überlappende Längsränder (LR) aufweist.

4. Vorrichtung nach einem der vorhergehenden Ansprüche,
**dadurch gekennzeichnet,**
daß eine Ringdichtung (RD), vorzugsweise aus plastischem Material, auf dem äußeren Umfang des Rohrdichtungsringes (RDR) im Bereich des in die Durchführungsöffnung (RZ) einzuführenden Teils angeordnet ist.

5. Vorrichtung nach einem der vorhergehenden Ansprüche,
**dadurch gekennzeichnet,**
daß ein Stützring (SR) am überstehenden Ende des Rohrdichtungsringes (RDR) als Einführungsanschlag zur Wandung (SW) angeformt ist.

6. Vorrichtung nach Anspruch 5,
**dadurch gekennzeichnet,**
daß der Stützring (SR) eine zur Wandung (SW) weisende Zentrierschräge (ZS) aufweist.

7. Vorrichtung nach einem der vorhergehenden Ansprüche,
**dadurch gekennzeichnet,**
daß der Rohrdichtungsring (RDR) an seinem überstehenden Ende eine Kupplungsvorrichtung, vorzugsweise eine umlaufende Rundnut (RN) mit einem am Rande abließenden Rastring (RR) für das anzuschließende Anpassunselement (AE) aufweist.

8. Vorrichtung nach einem der vorhergehenden Ansprüche,
**dadurch gekennzeichnet,**
daß der Rohrdichtungsring (RDR) entlang seiner Längsteilung (LT) im Innenbereich eine durch Nutansätze (NA) gebildete, vorzugsweise konisch sich verjüngende Spreiznut (SN) aufweist, in welche ein angepaßter konischer Spreizkeil (SK) mit einer von der Spreizungsweite abhängigen Breite eintreibbar ist.

9. Vorrichtung nach einem der vorhergehenden Ansprüche,
**dadurch gekennzeichnet,**
daß eine Stüzscheibe (SS) am überstehenden Ende des Rohrdichtungsringes (RDR) in der Öffnung desselben, vorzugsweise in einer dort befindlichen inneren Stützringnut (SRN) angeordnet ist.

10. Vorrichtung nach Anspruch 9,
**dadurch gekennzeichnet,**
daß die Stützscheibe (SS) quer geteilt ist.

11. Vorrichtung nach Anspruch 9 oder 10,
**dadurch gekennzeichnet,**
daß die Stützscheibe (SS) Einführungsöffnungen (EO) aufweist.

12. Vorrichtung nach einem der Ansprüche 9 bis 11,
**dadurch gekennzeichnet,**
daß die Stützscheibe (SS) parallel zur Achse abstehende Hilfsstützelemente (HS) aufweist.

13. Vorrichtung nach einem der vorhergehenden Anspüche,
**dadurch gekennzeichnet,**
daß nach auswärts gerichtete, vorzugsweise federnde Einführhilfen (EH) am einzuführenden Ende des Rohrdichtungsringes (RDR) angeordnet sind.

14. Vorrichtung nach Anspruch 13,
**dadurch gekennzeichnet,**
daß die Einführhilfen (EH) durch Längseinschnitte (LE) gebildete Laschen sind, die nach auswärts gerichtete Überstände (US) aufweisen.

15. Vorrichtung nach einem der vorhergehenden Ansprüche,
**dadurch gekennzeichnet,**
daß die Ringdichtung (RD) zwischen Stützlippen (SL) angeordnet ist.

16. Vorrichtung nach einem der vorhergehenden Ansprüche,
**dadurch gekennzeichnet,**
daß das Anpassungselement (AE) als ein in der Längsachse in Halbkörper geteilter Hohlkörper ausgebildet ist, daß an seinem dem Rohrdichtungsring (RDR) zugewandten Ende Kupplungselemente (KE), vorzugsweise ein nach einwärts gerichteter umlaufend angeformter Ring angeordnet ist, der in die Rundnut (RN) des Rohrdichtungsringes (RDR) eingreift, daß zwischen der Innenwandung des Anpassungselementes (AE) und dem Rastring (RR) des Rohrdichtungsringes (RDR) eine Kupplungsdichtung (KD) angeordnet ist und daß das Anpassungselement (AE) unter Druck, vorzugsweise mittels außen umlaufender Spannbänder (SB) dichtend zusammengepreßt und auf dem Rohrdichtungsring (RDR) fixiert ist.

17. Vorrichtung nach einem der vorhergehenden Ansprüche,
**dadurch gekennzeichnet,**
daß das Anpassungselement (AE) am freien Ende eine Abschlußwandung mit einem Einführungsbereich (EB) aufweist.

18. Vorrichtung nach Anspruch 17,
**dadurch gekennzeichnet,**
daß im Einführungsbereich (EB) auf den jeweiligen Einsatzfall angepaßte Einführungsöffnungen (EO) einschneidbar sind.

19. Vorrichtung nach einem der vorhergehenden Ansprüche,
**dadurch gekennzeichnet,**
daß das Anpassungselement (AE) im Inneren in Achsrichtung hintereinander liegende, von Zwischenräumen getrennte, scheibenförmige Lamellen (L) aufweist.

20. Vorrichtung nach Anspruch 19,
**dadurch gekennzeichnet,**
daß die Lamellen (L) den Einführungsöffnungen (EO) entsprechend fluchtende Durchführungsöffnungen aufweisen.

21. Vorrichtung nach einem der vorhergehenden Ansprüche,
**dadurch gekennzeichnet,**
daß am Kupplungsende des Anpassungselementes (AE) ein für Sonderzwecke, insbesondere für Kabelabfangvorrichtungen vorgesehener Freiraum (FR) angeordnet ist.

22. Vorrichtung nach einem der vorhergehenden Ansprüche,
**dadurch gekennzeichnet,**
daß die Einführungsöffnungen (EO) in der Abschlußwandung (AW), in den Lamellen (L), sowie in der Stützscheibe (SS) mittels einer Schneidevorrichtung bei Bedarf ausschneidbar sind.

23. Vorrichtung nach einem der vorhergehenden Ansprüche,
**dadurch gekennzeichnet,**
daß eine Dichtplatte (DP) im Bereich der Längsteilung (LT) des Rohrdichtunsringes (RDR) zwischen dem Spreizkeil (SK) und der Wand (SW) der Durchführungsöffnung (RZ) angeordnet ist.

24. Vorrichtung nach Anspruch 23,
**dadurch gekennzeichnet,**
daß eine Gleitschicht (GS) zwischen Dichtplatte (DP) und Spreizkeil (SK) angeordnet ist.

25. Vorrichtung nach einem der vorhergehenden Ansprüche,
**dadurch gekennzeichnet,**
daß der Spreizkeil (SK) mit Hilfe von Schraubmitteln (S) eintreibbar ist.

26. Vorrichtung nach einem der Ansprüche 1, 2 oder 4 bis 7 oder 9 bis 22,
**dadurch gekennzeichnet,**
daß der Rohrdichtungsring aus zwei Halbschalen (HS1, HS2) gebildet ist, die in einem in der Trennebene liegenden gemeinsamen Kippunkt (KP) gegeneinander kippbar gekoppelt sind.

27. Vorrichtung nach Anspruch 26,
**dadurch gekennzeichnet,**
daß ein Gegenlager (GL) im Bereich des Einganges der Durchführungs- oder Rohröffnung (RZ) innerhalb der Halbschalen (HS1, HS2) angeordnet ist.

28. Vorrichtung nach einem der Ansprüche 26 bis 27,
**dadurch gekennzeichnet,**
daß eine Halbschalendichtung (HSD) im Bereich der Trennebene zwischen den Halbschalen (HS1, HS2) angeordnet ist.

29. Vorrichtung nach einem der Ansprüche 26 bis 28,
**dadurch gekennzeichnet,**
daß die Längsränder (LR1, LR2) der Halbschalen (HS1, HS2) Profilierungen, vorzugsweise wellenförmige, aufweisen, die bei Aufspreizung des Durchmessers des Rohrdichtungsringes aus Halbschalen (HS1, HS2) unter Beibehaltung mindestens einer Dichtlinie (DL) aufeinander abgleiten.

30. Vorrichtung nach einem der Ansprüche 1 bis 7 oder 9 bis 22,
**dadurch gekennzeichnet,**
daß der Rohrdichtungsring (RDR) entlang eines Längsrandes (LR1) einen hinterschnittenen Wulst (W1) aufweist, der unter spitzem Winkel (SW) zur Längskante verläuft, daß hinter diesem Wulst (W1) zumindest eine Aussparung (A) angeordnet ist, daß der zweite Längsrand (LR2) zumindest einen in der Position der jeweiligen Aussparung (A) liegenden Fortsatz (F) aufweist, daß der Fortsatz (F) entlang seines Randes ebenfalls einen hinterschnittenen Wulst (W2) aufweist, wobei der Wulst (W2) unter gleichem Winkel (SW) zur Längskante so angeordnet ist, daß beide Wülste (W1, W2) im geöffneten Zustand des Rohrdichtungsringes (RDR) V-förmig auseinanderlaufen und daß weiterhin eine keilförmige, hinterschnittene Klemmschiene (KS) vorgesehen ist, die im geschlossenen Zustand des Rohrdichtungsringes (RDR) die Wülste (W1, W2) der inzwischen überschränkten Längsränder (LR1, LR2) den Rohrdichtungsring (RDR) spreizend überspannt.

## Claims

1. Device for sealing a passage opening or conduit opening, for example a conduit run in a cable shaft, comprising a conduit sealing ring (RDR) with an outer annular seal (RD) and an outwardly projecting end and an adaptor element (AE), characterized in that the conduit sealing ring (RDR) is longitudinally slit at least singly, in that the adaptor element (AE) is at least singly longitudinally divided and has a lead-in region (EB) for articles to be introduced as required and has lead-in openings (EO) adapted to the articles (K) to be led in and in that the adaptor element (AE) can be mounted on the projecting end of the conduit sealing ring (RDR).

2. Device according to Claim 1, characterized in that the conduit sealing ring (RDR) and the adaptor element (AE) comprise thermoplastic, preferably polypropylene.

3. Device according to one of the preceding claims, characterised in that the conduit sealing ring (RDR) is singly longitudinally divided and has, along its longitudinal division (LT), longitudinal edges (LR) which taper to a point and overlap.

4. Device according to one of the preceding claims, characterized in that an annular seal (RD), preferably made of plastic material, is arranged on the outer circumference of the conduit sealing ring (RDR) in the region of the part to be introduced into the passage opening (RZ).

5. Device according to one of the preceding claims, characterized in that a supporting ring (SR) is formed on the projecting end of the conduit sealing ring (RDR) as a lead-in stop to the wall (SW).

6. Device according to Claim 5, characterized in that the supporting ring (SR) has a centring bevel (ZS) facing the wall (SW).

7. Device according to one of the preceding claims, characterized in that the conduit sealing ring (RDR) has, on its projecting end, a coupling device, preferably a surrounding annular groove (RN) having a locking ring (RR), terminating at the edge, for the adaptor element (AE) to be connected.

8. Device according to one of the preceding claims, characterized in that the conduit sealing ring (RDR) has, along its longitudinal division (LT) in the internal region, an expanding groove (SN) which is formed by groove projections (NA), tapers preferably in a conical manner and into which an adapted conical expanding wedge (SK) with a breadth dependent on the expansion width can be driven.

9. Device according to one of the preceding claims, characterized in that a supporting disc (SS) is arranged on the projecting end of the conduit sealing ring (RDR) in the opening thereof, preferably in an inner supporting-ring groove (SRN) disposed there.

10. Device according to Claim 9, characterized in that the supporting disc (SS) is transversely divided.

11. Device according to Claim 9 or 10, characterized in that the supporting disc (SS) has lead-in openings (EO).

12. Device according to one of Claims 9 to 11, characterized in that the supporting disc (SS) has auxiliary supporting elements (HS) projecting parallel to the axis.

13. Device according to one of the preceding claims, characterized in that outwardly directed, preferably resilient lead-in aids (EH) are arranged on the end, to be led in, of the conduit sealing ring (RDR).

14. Device according to Claim 13, characterized in that the lead-in aids (EH) are tabs which are formed by longitudinal incisions (LE) and have outwardly directed projections (US).

15. Device according to one of the preceding claims, characterized in that the annular seal (RD) is arranged between supporting lips (SL).

16. Device according to one of the preceding claims, characterized in that the adaptor element (AE) is designed as a hollow body divided in its longitudinal axis into half-bodies, in that on the end of said adaptor element (AE) facing the conduit sealing ring (RDR) there are arranged coupling elements (KE), preferably an inwardly directed surroundingly formed-on ring which engages in the round groove (RN) of the conduit sealingly ring (RDR), in that a coupling seal (KD) is arranged between the inner wall of the adaptor element (AE) and the locking ring (RR) of the conduit sealing ring (RDR) and in that the adaptor element (AE) is sealingly compressed under pressure, preferably by means of externally surrounding clamping bands (SB), and is fixed on the conduit sealing ring (RDR).

17. Device according to one of the preceding claims, characterized in that the adaptor element (AE) has at its free end a terminating wall with a lead-in region (EB).

18. Device according to Claim 17, characterized in that lead-in openings (EO) adapted to the particular case of application can be cut in in the lead-in region (EB).

19. Device according to one of the preceding claims, characterized in that the adaptor element (AE) has in its interior disc-shaped segments (L) which are disposed one behind the other in the axial direction and are separated by interspaces.

20. Device according to Claim 19, characterized in that the segments (L) of the lead-in openings (EO) have correspondingly aligned passage openings.

21. Device according to one of the preceding claims, characterized in that an empty space (FR) intended for special purposes, in particular for cable clamping devices, is arranged on the coupling end of the adaptor element (AE).

22. Device according to one of the preceding claims, characterized in that the lead-in openings (EO) in the terminating wall (AW), in the segments (L), and in the supporting disc (SS) can be cut out as required by means of a cutting device.

23. Device according to one of the preceding claims, characterized in that a sealing plate (DP) is arranged, in the region of the longitudinal division (LT) of the conduit sealing ring (RDR), between the expanding wedge (SK) and the wall (SW) of the passage opening (RZ).

24. Device according to Claim 23, characterized in that a sliding layer (GS) is arranged between the sealing plate (DP) and the expanding wedge (SK).

25. Device according to one of the preceding claims, characterized in that the expanding wedge (SK) can be driven in with the aid of screwing means (S).

26. Device according to one of Claims 1, 2 or 4 to 7 or 9 to 22, characterized in that the conduit sealing ring is formed from two half-shells (HS1, HS2) which are coupled so as to be tiltable with respect to one another in a common tilt point (KP) lying in the dividing plane.

27. Device according to Claim 26, characterized in that an abutment (GL) is arranged in the region of the inlet of the passage opening or conduit opening (RZ), within the half-shells (HS1, HS2).

28. Device according to one of Claims 26 to 27, characterized in that a half-shell seal (HSD) is arranged in the region of the dividing plane, between the half-shells (HS1, HS2).

29. Device according to one of Claims 26 to 28, characterized in that the longitudinal edges (LR1, LR2) of the half-shells (HS1, HS2) have, preferably undulating, profiles which, on expansion of the diameter of the conduit sealing ring made of half-shells (HS1, HS2), slide over one another whilst maintaining at least one sealing line (DL).

30. Device according to one of Claims 1 to 7 or 9 to 22, characterized in that the conduit sealing ring (RDR) has along its longitudinal edge (LR1) an undercut bead (W1) which extends at an acute angle (SW) to the longitudinal edge, in that behind this bead (W1) at least one recess (A) is arranged, in that the second longitudinal edge (LR2) has at least one continuation (F) disposed in the position of the particular recess (A), in that the continuation (F) also has along its edge an undercut bead (W2), the bead (W2) being arranged at the same angle (SW) to the longitudinal edge in such a manner that the two beads (W1, W2) diverge in a V-shaped manner when the conduit sealing ring (RDR) is open and in that a wedge-shaped, undercut clamping bar (KS) is also provided which, when the conduit sealing ring (RDR) is closed, bridges over the beads (W1, W2) of the, now crossed over, longitudinal edges (LR1, LR2) so as to expand the conduit sealing ring (RDR).

## Revendications

1. Dispositif pour étanchéifier une ouverture de traversée ou une ouverture pour tube, par exemple d'un caniveau dans un puits à câbles, constitué par une bague d'étanchéité de tube (RDR) comportant une garniture d'étanchéité extérieure (RD) et une extrémité qui fait saillie extérieurement, et par un élément d'adaptation (AE1), caractérisé par le fait que la bague d'étanchéité de tube (RDR) est fendue au moins suivant une fente longitudinale, que l'élément d'adaptation (AE1) possède au moins une division longitudinale et comporte une zone d'introduction (EB) pour des objets devant être éventuellement introduits, ainsi que des ouvertures d'introduction (EO) adaptées aux objets (K) devant être introduits, et que l'élément d'adaptation (AE) peut être monté sur l'extrémité saillante de la bague d'étanchéité de tube (RDR).

2. Dispositif suivant la revendication 1, caractérisé par le fait que la bague d'étanchéité de tube (RDR) et l'élément d'adaptation (AE) sont réalisés en une matière thermoplastique, de préférence du polyéthylène.

3. Dispositif suivant l'une des revendications précédentes, caractérisé par le fait que la bague d'étanchéité de tube (RDR) possède au moins une division longitudinale et se termine en pointe le long de sa division longitudinale (LT) et comporte des bords longitudinaux (LR) qui se chevauchent.

4. Dispositif suivant l'une des revendications précédentes, caractérisé par le fait qu'il est prévu une bague d'étanchéité (RD), de préférence en matière plastique, sur le pourtour extérieur de la bague d'étanchéité de tube (RDR), au niveau de la zone de la partie devant être introduite dans l'ouverture de passage (RZ).

5. Dispositif suivant l'une des revendications précédentes, caractérisé par le fait qu'une bague d'appui (SR) est formée sur l'extrémité saillante de la bague d'étanchéité de tube (RDR), en tant que butée d'introduction pour la paroi (SW).

6. Dispositif suivant la revendication 5, caractérisée par le fait que la bague d'appui (SR) possède un biseau de centrage (ZS) tourné vers la paroi (SW).

7. Dispositif suivant l'une des revendications précédentes, caractérisé par le fait que la bague d'étanchéité de tube (RDR) comporte, sur son extrémité saillante, un dispositif d'accouplement, de préférence une gorge périphérique circulaire (RN) comportant une bague d'encliquetage (RR), qui se termine au niveau du bord et qui est prévu pour l'élément d'adaptation (AE) qui doit être raccordé.

8. Dispositif suivant l'une des revendications précédentes, caractérisé par le fait que la bague d'étanchéité de tube (RDR) possède, le long de sa division longitudinale (LT), dans la zone intérieure, une rainure d'écartement (SN), qui se rétrécit de préférence avec une forme conique, est formée par des appendices saillants (NA) délimitant la rainure et dans laquelle peut être introduit un coin d'écartement conique adapté (SK) qui possède une largeur qui dépend de la largeur d'écartement.

9. Dispositif suivant l'une des revendications précédentes, caractérisé par le fait qu'un disque d'appui (SS) est disposé sur l'extrémité saillante de la bague d'étanchéité de tube (RDR), dans l'ouverture de cette bague, de préférence dans une bague annulaire intérieure d'appui (SRN), située en cet endroit.

10. Dispositif suivant la revendication 9, caractérisé par le fait que le disque d'appui (SS) est fendu transversalement.

11. Dispositif suivant la revendication 9 ou 10, caractérisé par le fait que le disque d'appui (SS) possède des ouvertures d'introduction (EO).

12. Dispositif suivant l'une des revendications précédentes 9 à 11, caractérisé par le fait que le disque d'appui (SS) possède des éléments d'appui auxiliaires (HS) qui font saillie parallèlement à l'axe.

13. Dispositif suivant l'une des revendications précédentes, caractérisé par le fait que des systèmes auxiliaires d'introduction (EH), qui sont dirigés vers l'extérieur et sont de préférence élastiques, sont disposés sur l'extrémité de la bague d'étanchéité de tube (RDR), qui doit être introduite.

14. Dispositif suivant la revendication 13, caractérisé par le fait que les systèmes auxiliaires d'introduction (EH) sont des pattes formées par des découpes longitudinales (LE) et qui possèdent des parties saillantes (US) dirigées vers l'extérieur.

15. Dispositif suivant l'une des revendications précédentes, caractérisé par le fait que la bague d'étanchéité (RD) est disposée entre des lèvres d'appui (SL).

16. Dispositif suivant l'une des revendications précédentes, caractérisé par le fait que l'élément d'adaptation (AE) est agencé sous la forme d'un corps creux, qui est divisé en des moitiés suivant l'axe longitudinal, que sur l'extrémité de cet élément d'adaptation, tournée vers la bague d'étanchéité de tube (RDR), sont disposés des éléments d'accouplement (KE), de préférence une bague rentrante, formée sur la circonférence et qui s'engage dans la rainure circulaire (RN) de la bague d'étanchéité de tube (RDR), qu'une garniture d'étanchéité d'accouplement (KD) est disposée entre la paroi intérieure de l'élément d'adaptation (AE) et l'anneau d'encliquetage (RR) de la bague d'étanchéité de tube (RDR), et que l'élément d'adaptation (AE) est comprimé de manière à établir l'étanchéité et est fixé sur la bague d'étanchéité de tube (RDR), sous l'action d'une pression produite de préférence au moyen de colliers de serrage extérieurs périphériques (SB).

17. Dispositif suivant l'une des revendications précédentes, caractérisé par le fait que l'élément d'adaptation (AE) possède, à son extrémité libre, une paroi terminale comportant une zone d'introduction (EB).

18. Dispositif suivant la revendication 17, caractérisé par le fait que des ouvertures d'introduction (EO), qui sont adaptées à chaque cas d'utilisation, peuvent être découpées dans la zone d'introduction (EB).

19. Dispositif suivant l'une des revendications précédentes, caractérisé par le fait que l'élément d'adaptation (EA) possède des lamelles en forme de disques (L), qui sont situées intérieurement les unes derrière les autres dans la direction axiale et sont séparées par des espaces intercalaires.

20. Dispositif suivant la revendication 19, caractérisé par le fait que les lamelles (L) possèdent des ouvertures de passage qui sont alignées en correspondance avec les ouvertures d'introduction (EO).

21. Dispositif suivant l'une des revendications précédentes, caractérisé par le fait que sur l'extrémité d'accouplement de l'élément d'adaptation (EA) est ménagé un espace libre (FR) prévu pour des utilisations particulières, notamment pour des dispositifs de retenue de câbles.

22. Dispositif suivant l'une des revendications précédentes, caractérisé par le fait que les ouvertures d'introduction (EO) peuvent, le cas échéant, être découpées dans le disque d'appui (SS) au moyen d'un dispositif de découpage.

23. Dispositif suivant l'une des revendications précédentes, caractérisé par le fait qu'une plaque d'étanchéité (DP) est disposée dans la zone de la division longitudinale (LT) de la bague d'étanchéité de tube (RDR), entre le coin d'écartement (SK) et la paroi (SW) de l'ouverture de passage (RZ).

24. Dispositif suivant la revendication 23, caractérisé par le fait qu'une couche de glissement (GS) est disposée entre la plaque d'étanchéité (DP) et le coin d'écartement (SK).

25. Dispositif suivant l'une des revendications précédentes, caractérisé par le fait que le coin d'écartement (SK) peut être entrainé à l'aide de moyens filetés (S).

26. Dispositif suivant l'une des revendications 1, 2 ou 4 à 7 ou 9 à 22, caractérisé par le fait que la bague d'étanchéité de tube est formée de deux demi-coques (HS1, HS2), qui sont accouplées, de manière à pouvoir basculer l'une par rapport à l'autre, au niveau d'un point de basculement commun (KP) situé dans le plan de séparation.

27. Dispositif suivant la revendication 26, caractérisé par le fait qu'un palier antagoniste (GL) est disposé dans la zone d'entrée de l'ouverture de passage ou de l'ouverture tubulaire (RZ) à l'intérieur des demi-coques (HS1, HS2).

28. Dispositif suivant l'une des revendications précédentes, caractérisé par le fait qu'une garniture d'étanchéité de demi-coque (HSD) est disposée dans la zone du plan de séparation entre les demi-coques (HS1,HS2).

29. Dispositif suivant l'une des revendications 26 à 28, caractérisé par le fait que les bords longitudinaux (LR1,LR2) des demi-coques (HS1,HS2) possèdent des profils, de préférence ondulés, qui, lors de l'accroissement du diamètre de la bague d'étanchéité de tube formée des demi-coques (HS1, HS2), glissent l'un sur l'autre tout en conservant au moins une ligne d'étanchéité (DL).

30. Dispositif suivant l'une des revendications 1 à 7 ou 9 à 22, caractérisé par le fait que la bague d'étanchéité de tube (RDR) possède, le long d'un bord longitudinal (LR1), un rebord formé en dépouille (W1), qui fait un angle aigu (SW) par rapport au bord longitudinal, qu'au moins un évidement (A) est disposé en arrière de ce rebord (W1), que le second bord longitudinal (LR2) possède au moins un appendice saillant (F) situé dans la position de l'évidement respectif (A), que l'appendice saillant (F) possède, le long de son bord, également un rebord (W2) formé en dépouille, le rebord (W2) faisant le même angle (SW) par rapport à l'arête longitudinale de sorte que les deux rebords (W1,W2) s'écartent en forme de V, lorsque la bague d'étanchéité de tube (RDR) est ouverte, et qu'il est en outre prévu un rail de blocage en forme de coin (KS) formé en dépouille, qui, lorsque la bague d'étanchéité de tube (RDR) est fermée, s'étend au-dessus des rebords (W1,W2) des bords longitudinaux (LR1,LR2), qui ont été placés entre-temps en chevauchement, en écartant la bague d'étanchéité du tube (RDR).
